(19) Europäisches Patentamt
European Patent Office
Office européen des brevets

(11) **EP 2 179 270 B1**

(12) **FASCICULE DE BREVET EUROPEEN**

(45) Date de publication et mention de la délivrance du brevet:
**23.03.2011 Bulletin 2011/12**

(51) Int Cl.:
*G01N 21/64* (2006.01)     *G01N 21/27* (2006.01)

(21) Numéro de dépôt: **08805855.7**

(86) Numéro de dépôt international:
**PCT/FR2008/050911**

(22) Date de dépôt: **27.05.2008**

(87) Numéro de publication internationale:
**WO 2008/152292 (18.12.2008 Gazette 2008/51)**

(54) **PROCEDE ET SYSTEME POUR CARACTERISER UN TISSU BIOLOGIQUE PIGMENTE**

VERFAHREN UND SYSTEM ZUR KENNZEICHNUNG VON PIGMENTIERTEM BIOLOGISCHEM GEWEBE

METHOD AND SYSTEM FOR CHARACTERIZING A PIGMENTED BIOLOGICAL TISSUE.

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **01.06.2007 FR 0703924**

(43) Date de publication de la demande:
**28.04.2010 Bulletin 2010/17**

(73) Titulaires:
- **Force-A**
  **91400 Orsay (FR)**
- **Centre National de la Recherche Scientifique (CNRS)**
  **75016 Paris (FR)**
- **Universite Paris-Sud**
  **91400 Orsay (FR)**

(72) Inventeurs:
- **CEROVIC, Zoran**
  **F-75015 Paris (FR)**
- **MOISE, Nicolae**

  **(FR)**
- **LATOUCHE, Gwendal**
  **F-75013 Paris (FR)**
- **GOULAS, Yves**
  **F-92350 Le Plessis Robinson (FR)**

(74) Mandataire: **Pontet, Bernard**
**Pontet Allano & Assosies Selarl**
**6 Avenue du Général de Gaulle**
**78000 Versailles (FR)**

(56) Documents cités:
**FR-A- 2 830 325     US-A1- 2006 082 768**

- HAGEN ET AL: "Chlorophyll fluorescence as a tool for non-destructive estimation of anthocyanins and total flavonoids in apples" POSTHARVEST BIOLOGY AND TECHNOLOGY, ELSEVIER,, NL, vol. 41, no. 2, août 2006 (2006-08), pages 156-163, XP005558790 ISSN: 0925-5214
- AGATI G ET AL: "Nondestructive evaluation of anthocyanins in olive (Olea europaea) fruits by in situ chlorophyll fluorescence spectroscopy" JOURNAL OF AGRICULTURAL AND FOOD CHEMISTRY, AMERICAN CHEMICAL SOCIETY. WASHINGTON, US, vol. 53, no. 5, 10 février 2005 (2005-02-10), pages 1354-1363, XP002400872 ISSN: 0021-8561
- GOULAS Y ET AL: "Dualex: a new instrument for field measurements of epidermal ultraviolet absorbance by chlorophyll fluorescence" APPLIED OPTICS, OSA, OPTICAL SOCIETY OF AMERICA, WASHINGTON, DC, US, vol. 43, no. 23, 10 août 2004 (2004-08-10), pages 4488-4496, XP002459288 ISSN: 0003-6935
- BELZILE C ET AL: "An operational fluorescence system for crop assessment" PROCEEDINGS OF THE SPIE - THE INTERNATIONAL SOCIETY FOR OPTICAL ENGINEERING SPIE-INT. SOC. OPT. ENG USA, vol. 5271, no. 1, 2004, pages 244-252, XP002464606 ISSN: 0277-786X

**Description**

La présente invention concerne un procédé pour caractériser un tissu biologique pigmenté. Elle concerne également un système mettant en oeuvre ce procédé.

L'invention concerne, plus particulièrement, un procédé et un système pour caractériser un tissu d'une entité biologique, tel qu'une baie, comprenant un premier composé chromophore peu ou non fluorescent, tel qu'un anthocyane ou un flavonol, et un deuxième composé chromophore fluorescent, tel que la chlorophylle. La caractérisation vise à déterminer la teneur en premier composé du tissu biologique. Une telle caractérisation d'un tissu biologique présente un grand intérêt. Par exemple dans le domaine vinicole, la teneur en anthocyanes des baies de raisin représente une information concernant leur maturité et la qualité du vin qui sera obtenu à partir de ces baies de raisin. Dans le domaine nutritionnel, la teneur en flavonols de la peau des fruits et légumes est un indicateur de leur valeur nutritionnelle.

Le document FR 2 830 325 divulgue un instrument optique qui permet de mesurer, par effet écran, des caractéristiques d'absorption lumineuse d'un échantillon de tissu biologique comprenant un premier composé chromophore non fluorescent et un deuxième composé chromophore et fluorescent. Le procédé divulgué dans ce document consiste à mesurer la fluorescence induite par excitation du deuxième composé par un premier et un deuxième rayonnement, de longueurs d'onde différentes et éclairant l'échantillon de tissu biologique. L'un de ces rayonnements, dit de référence, est peu ou pas absorbé par le premier composé alors que l'autre, dit de mesure, est relativement bien absorbé. En mesurant la fluorescence induite par les deux rayonnements et en faisant le rapport des fluorescences mesurées, le procédé permet de mesurer les caractéristiques d'absorption lumineuse de l'échantillon et par conséquent la teneur en premier composé du tissu biologique.

Le procédé divulgué dans le document de Hagen, "Chlorophyll fluorescence as a tool for non-destructive estimation of anthocyanins and total flavonoids in apples", POSTHARVEST BIOLOGY AND TECHNOLOGY, vol. 41, no. 2, août 2006, pages 156-163, pour déterminer la teneur en un composé chromophore et non fluorescent est comparable à celui divulgué dans FR2830325, et comprend les caractéristiques du préambule de la revendication indépendante 1.

Cependant, l'évolution de la teneur en premier composé, chromophore non fluorescent, provoque une saturation de la mesure des rayonnements de fluorescence induits par le premier rayonnement. Lorsque la concentration en premier composé du tissu augmente, l'absorption du rayonnement de mesure par le premier composé augmente aussi. Le rayonnement de fluorescence induit par le rayonnement de mesure devient de plus en plus faible et n'est plus dissociable du bruit de mesure. Il arrive aussi que, lorsque la concentration en premier composé du tissu augmente, le rayonnement de référence commence à être affecté. Dans la présente description, on appelle ces phénomènes « saturation ».

La plupart des procédés et systèmes de caractérisation d'un tissu biologique actuellement connus sont limités à une caractérisation d'un tissu biologique jusqu'à la saturation. Parmi ces systèmes on peut citer ceux basés sur la colorimétrie, qui en plus de la saturation, rencontrent des problèmes liés aux dépôts pouvant être présents sur le tissu biologique et affecter les mesures. On peut aussi citer les systèmes basés sur la spectroscopie infrarouge qui rencontre des problèmes liés à la présence d'eau dans le tissu biologique et qui réalisent une détermination de la teneur en premier composé à partir d'une déduction empirique chémométrique.

D'autres procédés et systèmes de caractérisation d'un tissu biologique permettent d'éviter la saturation par des opérations de dilutions en laboratoire. Un inconvénient de tels procédés et système est qu'ils sont destructifs.

Un but de l'invention est de proposer un nouveau procédé et système permettant de caractériser un tissu biologique au-delà de la saturation de manière non destructive, non invasive.

Un autre but de l'invention est de proposer un nouveau procédé et un système permettant de caractériser un tissu biologique au-delà de la saturation et utilisable in situ.

L'invention propose ainsi un procédé pour déterminer, la teneur en un composé chromophore et non fluorescent, dit premier composé, d'un tissu biologique d'une entité biologique, le tissu biologique comprenant en outre un composé chromophore et fluorescent, dit deuxième composé, ce procédé comprenant au moins une itération des opérations suivantes :

- émission par des moyens d'émission, en direction du tissu, d'un premier rayonnement optique, dit de mesure, et d'un deuxième rayonnement optique, dit de référence, chacun choisi de manière à induire un rayonnement de fluorescence du deuxième composé, chacun des premier et deuxième rayonnements étant partiellement absorbé par le premier composé,
- mesure, par des moyens de mesure,
- des rayonnements de fluorescence induits par les premier et deuxième rayonnements, et
- détermination, à partir de la mesure, de la teneur en premier composé du tissu ;

Le procédé selon l'invention est caractérisé en ce qu'il comprend en outre au moins une compensation d'une

EP 2 179 270 B1

saturation de mesure due à une trop grande absorption du rayonnement de mesure par le premier composé, due à une trop grande teneur du premier composé, la compensation comprenant un choix, pour le rayonnement de mesure, d'une longueur d'onde correspondant à une plus faible absorption dans le spectre d'absorption du premier composé.

Le procédé selon l'invention permet donc de réaliser la caractérisation d'un tissu biologique d'une entité biologique, au delà d'une saturation due à une trop grande teneur du premier composé, c'est-à-dire, à une trop grande absorption du rayonnement de mesure par le premier composé, par un décalage de la longueur d'onde du rayonnement de mesure vers une longueur d'onde de plus faible absorption dans le spectre d'absorption du premier composé. De plus, ne nécessitant pas d'opérations en laboratoire, le procédé selon l'invention est non destructif, non invasif et peut être mis en oeuvre in situ.

Avantageusement, le procédé selon l'invention peut en outre comprendre une émission, par les moyens d'émission, en direction du tissu, d'un troisième rayonnement optique, dit supplémentaire, choisi de manière à induire un rayonnement de fluorescence du deuxième composé. Dans ce cas, le procédé selon l'invention comprend une mesure du rayonnement de fluorescence induit par le rayonnement supplémentaire. Cette mesure est ensuite utilisée pour déterminer si le rayonnement de référence est affecté ou non par le premier composé. En effet, en fonction du rapport des rayonnements de fluorescence induits par les deux rayonnements, de référence et supplémentaire, et de la variation de ce rapport, on peut déterminer si le rayonnement de référence est affecté ou non par le premier composé. Lorsqu'on détecte que le rayonnement de référence est affecté par le premier composé, il faut réaliser une compensation de saturation, par exemple en inversant le rapport mesuré.

Selon, un premier aspect de l'invention, lorsque la teneur du tissu en premier composé augmente de manière que le premier composé affecte le rayonnement de référence, la longueur d'onde choisie pour le rayonnement de mesure après saturation correspond à une longueur d'onde située autour de la longueur d'onde du rayonnement de référence avant saturation. Selon ce premier aspect de l'invention, lorsque la saturation se produit, une nouvelle longueur d'onde est choisie pour le rayonnement de mesure. La nouvelle longueur d'onde choisie pour le rayonnement de mesure peut être la longueur d'onde du rayonnement de référence avant la saturation. Lorsque la distance entre le tissu biologique et les moyens d'émission et les moyens de mesure est fixe, il n'est pas nécessaire d'utiliser un rayonnement de référence. Cependant le premier rayonnement de mesure, même saturé, peut être utilisé dans le rapport mesuré.

Lorsque la distance entre le tissu biologique et les moyens d'émission et les moyens de mesure n'est pas fixe, la longueur d'onde choisie pour le rayonnement de référence après la saturation peut correspondre à une longueur d'onde qui n'est pas ou peu affectée par la teneur en premier composé. Plus particulièrement, la longueur d'onde du rayonnement de référence après la saturation peut correspondre à la longueur d'onde du rayonnement supplémentaire.

Selon un deuxième aspect de l'invention, lorsque la longueur d'onde de référence n'est pas affectée par la teneur en premier composé du tissu, la longueur d'onde choisie pour le rayonnement de mesure correspond à une plus faible absorption par le premier composé qu'une longueur d'onde, dite limite, pour laquelle une saturation potentielle se produirait pour une teneur maximale prévue du premier composé dans le tissu biologique. Lors d'une série de mesure, la teneur maximale potentielle du premier composé peut être déterminée. En fonction de la valeur maximale potentielle et du spectre d'absorption du premier composé, une absorption maximale pouvant potentiellement être obtenue peut être calculée. Une longueur d'onde, dite limite, correspondant à une saturation pour l'absorption maximale, peut être déterminée pour le rayonnement de mesure. Ainsi, si une longueur d'onde, correspondant à une plus faible absorption que la longueur d'onde limite, est choisie pour le rayonnement de mesure, aucune saturation concernant le rayonnement de mesure ne se produira lors de la série de mesure. La longueur d'onde limite peut être déterminée en fonction d'un pic d'absorption. Dans ce cas, la longueur d'onde de mesure est choisie par rapport au pic d'absorption. Le procédé selon l'invention peut alors comprendre une détermination du décalage par rapport au pic d'absorption de manière à éviter une saturation ou obtenir des valeurs de la teneur du premier composé évoluant de manière plus linaire.

Selon un troisième aspect de l'invention, lorsque la longueur d'onde de référence n'est pas affectée par la teneur en premier composé du tissu, la compensation de la saturation peut être réalisée lorsque la teneur du tissu en le premier composé provoque une saturation de mesure, ladite compensation étant réitérée à chaque saturation. Lorsque, après une série de mesure réalisée avec un rayonnement de mesure ayant une première longueur d'onde correspondant par exemple à un pic d'absorption, on atteint une première saturation, la longueur d'onde du rayonnement de mesure peut être décalée vers une deuxième longueur d'onde correspondant à une absorption plus faible que la première longueur d'onde de manière que cette deuxième longueur d'onde ne provoque pas de saturation de mesure. Puis une deuxième série de mesure peut être menée, jusqu'à une nouvelle saturation. La longueur d'onde du rayonnement de mesure peut alors être décalée vers une troisième longueur d'onde correspondant à une absorption plus faible que la deuxième longueur d'onde, et ainsi de suite. Lors du choix d'une nouvelle longueur d'onde on peut tenir compte de la différence d'absorption dans le calcul de la teneur du premier composé dans le tissu. Cette différence d'absorption peut être obtenue par étude du spectre d'absorption du premier composé fournissant des valeurs d'étalonnage pour les différentes longueurs d'ondes choisies.

Les trois aspects de l'invention décrits ci-dessus peuvent avantageusement être combinés.

Avantageusement, le procédé selon l'invention, peut comprendre une modification de la longueur d'onde du

3

rayonnement de mesure et/ou du rayonnement de référence en fonction d'une caractéristique physicochimique ayant une influence sur le spectre d'absorption du premier composé et/ou sur le spectre de fluorescence du deuxième composé.

La caractéristique physicochimique peut être une caractéristique choisie dans la liste suivante :

- le pH du tissu biologique
- les effets de co-pigmentation affectant le premier composé, et
- les effets des changements dans les structures de support du deuxième composé.

La longueur d'onde du rayonnement de mesure et/ou du rayonnement de référence peut aussi être modifiée en fonction d'une apparition dans le tissu biologique, d'un nouveau composé, par exemple par changement covalent, modifiant le spectre d'absorption du premier composé ou le spectre de fluorescence du deuxième composé.

Avantageusement, le rayonnement de mesure (ou le rayonnement de référence) peut être émis à une intensité prédéterminée et le rayonnement de référence (ou le rayonnement de mesure) à une intensité variable de manière à ce que les rayonnements de fluorescence induits par chacun desdits rayonnements de référence et de mesure soient égaux en intensité.

L'intensité du premier rayonnement peut être ajustée en fonction d'un signal, dit de commande, relatif aux rayonnements de fluorescences induits, d'une part par le rayonnement de mesure, et d'autre part par le rayonnement de référence.

Par ailleurs, les intensités des rayonnements de mesure et de référence peuvent varier de manière alternée, en décalage de phase, à une fréquence prédéterminée qui peut être par exemple de 1kHz.

Le procédé selon l'invention peut avantageusement comprendre une synchronisation par modulation de phase des rayonnements émis par les moyens d'émission.

Chacun des rayonnements de mesure et de référence peut être émis sous forme d'impulsions.

La détermination de la teneur en premier composé peut comprendre un calcul du rapport (fluorescence induit par le rayonnement de référence) divisé par (fluorescence induit par le rayonnement de mesure).

Selon une particularité avantageuse du procédé selon l'invention, la mesure des rayonnements de fluorescence peut être réalisée :

- soit sur un échantillon de tissu prélevé sur l'entité biologique ;
- soit directement sur l'entité biologique portant le tissu, de manière non destructive et non invasive, c'est-à-dire sans avoir à réaliser de prélèvement.

Le procédé selon l'invention peut avantageusement comprendre une détermination de l'évolution, dans le temps, de la teneur en le premier composé du tissu biologique. Cette évolution peut être déterminée selon une unité de temps qui peut être le jour. Elle peut, par exemple faire l'objet d'une courbe, montrant l'évolution de la teneur du composé en fonction de l'unité de temps choisie.

Dans un exemple d'application non limitatif du premier aspect du procédé selon l'invention, le tissu biologique est la peau d'une baie de raisin, le premier composé est un anthocyane et le deuxième composé est la chlorophylle. Lorsque la distance entre le tissu et les moyens d'émission et les moyens de mesure est fixe :

- la longueur d'onde du rayonnement de mesure avant saturation est de 530nm ;
- la longueur d'onde du rayonnement de référence avant saturation est de 650nm ;
- la longueur d'onde du rayonnement supplémentaire est de 450nm ;
- la longueur d'onde du rayonnement de mesure après saturation est de 650nm ;
- et il n'y pas besoin d'un rayonnement de référence après la saturation.

Toujours dans le cas de cet exemple, lorsque la distance entre le tissu et les moyens d'émission et les moyens de mesure n'est pas fixe :

- la longueur d'onde du rayonnement de mesure avant saturation est de 530nm ;
- la longueur d'onde du rayonnement de référence avant saturation est de 650nm ;
- la longueur d'onde du rayonnement supplémentaire est de 450nm ;
- la longueur d'onde du rayonnement de mesure après saturation est de 650nm ;
- la longueur d'onde du rayonnement de référence après saturation est de 450nm ;

Dans ce cas, la teneur en anthocyanes de la peau d'une baie de raisin peut être déterminée selon les relations suivantes :

$$ANTH_{avant\ saturation} = logFER\_ANTH\_GREEN - logFER\_CHL_G$$

$$ANTH_{après\ saturation} = C + logFER\_ANTH\_RED - logFER\_CHL_R$$

avec

1. logFER_ANTH_GREEN = log (FRFred/FRFgreen)
2. logFER_ANTH_RED = log (FRFblue/FRFred) et
3. $logFER\_CHL_G$ = log (FRFred/FRFgreen)
4. $logFER\_CHL_R$ = log (FRFblue/FRFred)

Dans ces expressions :

- FRFred correspond au rayonnement de fluorescence de la chlorophylle induit par un rayonnement émis à 650nm, c'est-à-dire le rayonnement de référence avant saturation et le rayonnement de mesure après saturation ;
- FRFgreen correspond au rayonnement de fluorescence de la chlorophylle induit par un rayonnement émis à 530nm, c'est-à-dire le rayonnement de mesure avant saturation ;
- FRFblue correspond au rayonnement de fluorescence de la chlorophylle induit par un rayonnement émis à 450nm, c'est-à-dire le rayonnement supplémentaire avant saturation et le rayonnement de référence après saturation ;
- Les expressions 3 et 4 correspondent à au moins une mesure réalisée avant apparition d'anthocyanes dans la peau du raisin. Elle sert de référence pour les mesures réalisées après apparition des anthocyanes ; et
- C est une constante telle que $ANTH_{après\ saturation}$ est égal à $ANTH_{avant\ saturation}$ au moment de la saturation.

Dans un autre exemple d'application non limitatif et selon le troisième aspect de l'invention, le tissu biologique est la peau d'une baie de raisin, le premier composé est un flavonol, le deuxième composé est la chlorophylle :

- la longueur d'onde du rayonnement de mesure avant saturation est autour de 375nm ;
- la longueur d'onde du rayonnement de référence avant saturation est autour de 650nm ;
- la longueur d'onde du rayonnement de mesure après saturation est autour de 450nm ; et
- la longueur d'onde du rayonnement de référence après saturation reste autour de 650nm ;

Selon encore un autre aspect de l'invention il est proposé un système mettant en oeuvre le procédé selon l'invention.

D'autres caractéristiques et avantages de l'invention apparaîtront à l'examen de la description détaillée d'un mode de réalisation nullement limitatif, et des dessins annexés sur lesquels :

- la figure 1 est une représentation schématique d'un premier mode de réalisation du système selon l'invention ;
- la figure 2 est une représentation schématique d'un deuxième mode de réalisation du système selon l'invention ;
- la figure 3 est une représentation schématique du principe de mesure, dans le premier mode de réalisation du système selon l'invention ;
- la figure 4 est une représentation schématique du principe de mesure, dans le deuxième mode de réalisation du système selon l'invention ;
- les figures 5, 6 et 7 sont une représentation schématique d'un système selon le deuxième mode de réalisation.
- la figure 8 est une représentation des spectres de fluorescence de la chlorophylle, d'absorption d'un anthocyane, d'absorption d'un flavonol ainsi que des différents rayonnements et filtres mis en oeuvre selon le premier aspect du procédé selon l'invention ;
- la figure 9 est une représentation des résultats obtenus lors de la mesure de la teneur en anthocyanes de la peau d'une baie de raisin selon le premier aspect du procédé selon l'invention ;
- la figure 10 une représentation des spectres de fluorescence de la chlorophylle, d'absorption d'un anthocyane, ainsi que des différents rayonnements et filtres mis en oeuvre selon le deuxième aspect du procédé selon l'invention ;
- la figure 11 est une représentation des résultats obtenus lors de la mesure de la teneur en anthocyanes de la peau d'une baie de raisin selon le deuxième aspect du procédé selon l'invention ;
- la figure 12 est une représentation des résultats obtenus lors de la mesure de la teneur en anthocyanes de la peau d'une baie de raisin selon une combinaison du premier et du deuxième aspect du procédé selon l'invention ;
- la figure 13 est une représentation d'un exemple de variation du spectre d'absorption des anthocyanes en fonction du pH ;

L'exemple de réalisation non limitatif que nous allons décrire ci-dessous concerne un système de mesure de la teneur en un premier composé chromophore non fluorescent, appartenant à la famille des polyphénols, d'un tissu d'une entité biologique comprenant en outre un composé chromophore et fluorescent qui est la chlorophylle. La mesure des polyphénols se fait par la méthode de la fluorescence de la chlorophylle décrite dans le document FR 2 830 325.

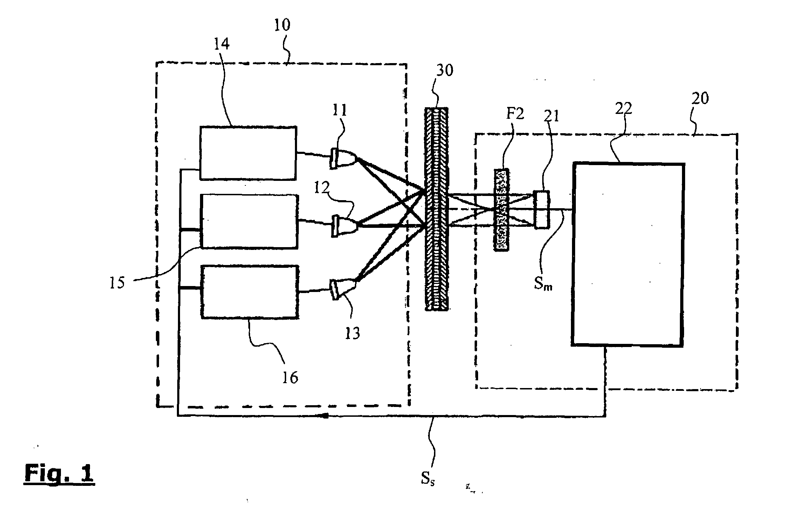

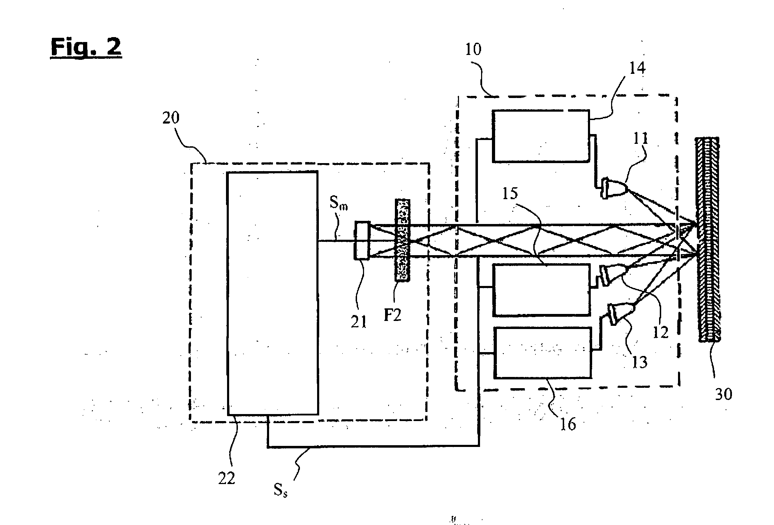

Les figures 1 et 2 sont des représentations schématiques de deux modes de réalisation d'un système selon l'invention. Dans ces deux modes de réalisation, le système se présente sous la forme de deux parties : une partie émettrice 10 et une partie réceptrice 20. Dans le premier mode de réalisation représenté en figure 1, les parties émettrice 10 et réceptrice 20 sont disposées de part et d'autre d'un échantillon d'un tissu végétal 30, alors que dans le deuxième mode de réalisation représenté en figure 2, les parties émettrice 10 et réceptrice 20 sont disposées du même coté d'un échantillon de tissu biologique 30.

Quelque soit le mode de réalisation, la partie émettrice 10 comprend trois sources de rayonnement 11, 12 et 13 éclairant la face avant d'un échantillon de tissu biologique 30. Chacune des sources 11 à 13 est associée à une alimentation pulsée 14 à 16, telle que montrée sur les figures 1 et 2, et commandée par un signal de synchronisation $S_s$. Les sources 11 à 13 sont prévues pour induire la fluorescence de la chlorophylle. La partie émettrice 10 peut comprendre en outre un filtre optique, non représenté, situé entre les sources 11 à 13 et l'échantillon 30, pour filtrer les composantes indésirables des rayonnements 11 à 13 émis vers l'échantillon 30.

La partie réceptrice 20 du système selon l'invention comprend un détecteur 21, une photodiode au silicium fournissant un signal électrique en fonction des rayonnements de fluorescence détectés, associé à un filtre optique F2, disposé entre l'échantillon 30 et le détecteur 21. La fonction de ce filtre F2 est de :

-    bloquer le passage des rayonnements des sources d'excitation 11 à 13 vers le détecteur 21,
-    transmettre partiellement ou totalement l'émission de la fluorescence de la chlorophylle induite par les rayonnements optiques émis par les sources 11 à 13.

La partie réceptrice 20 du système comprend en outre un bloc 22 comprenant des moyens de commande et de calculs permettant d'une part de réaliser la synchronisation des alimentations 14 à 16 par l'intermédiaire d'un signal de synchronisation $S_s$ et de déterminer la teneur en premier composé de l'échantillon de tissu 30 en fonction du signal de mesure $S_m$ fourni par le détecteur 21.

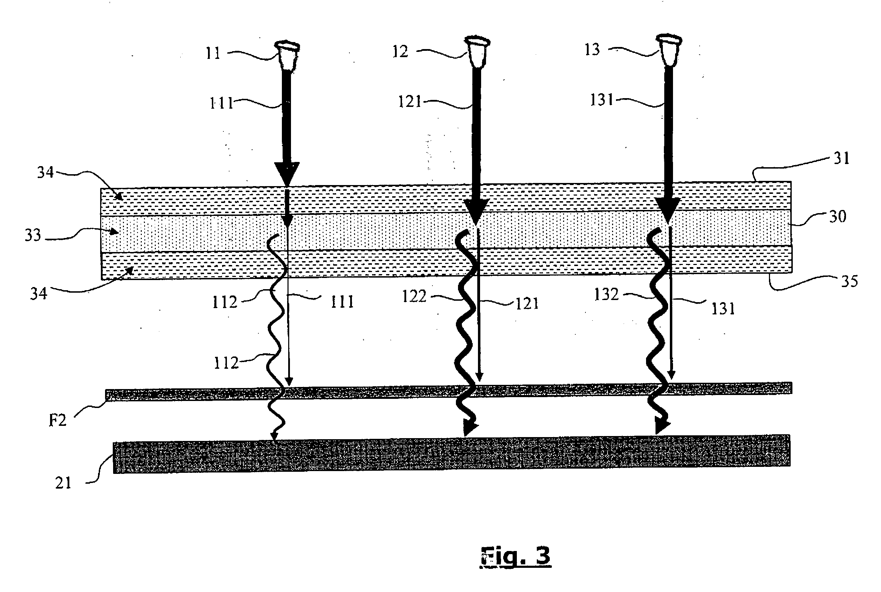

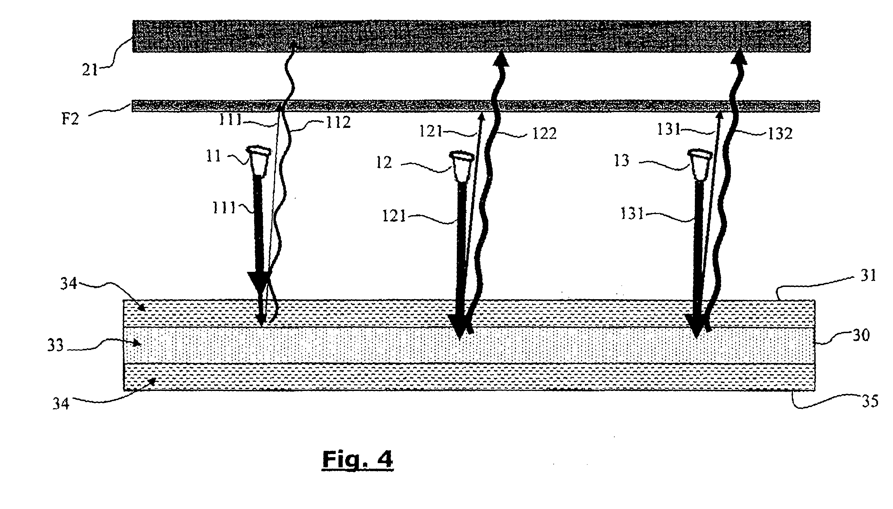

Les figures 3 et 4 sont des représentations schématiques du principe de mesure et des trajets optiques des différents rayonnements, respectivement dans le premier et le deuxième mode de réalisation. En référence aux figures 3 et 4, les sources 11 à 13, sont préférentiellement des diodes électroluminescentes (LED) et éclairent la même face 31 de l'échantillon 30. Les sources 11 à 13 émettent trois rayonnements, respectivement 111, 121 et 131, destinés à induire la fluorescence de la chlorophylle 33 et induire trois rayonnements fluorescents, respectivement 112 , 122 et 132. Dans le premier mode de réalisation la partie réceptrice 20 du système se trouvant du côté opposé de la feuille ou de la baie par rapport à la partie émettrice 10, ce sont les rayonnements de fluorescence émis, par la chlorophylle, vers le côté opposé aux sources 11 à 13 qui seront détectés par le détecteur 21. En effet, dans ce premier mode de réalisation, le détecteur 21 est prévu pour détecter la fluorescence émise vers la face arrière 35 de l'échantillon pour mesurer la teneur en polyphénols 34.

La figure 4 représente les rayonnements fluorescents 112, 122 et 132 induits par les rayonnements 111, 121 et 131, et émis par la chlorophylle vers les sources 11, 12 et 13. Dans ce deuxième mode de réalisation la partie réceptrice 20 du système se trouvant du même côté de la feuille ou de la baie que la partie émettrice 10, ce sont les rayonnements émis, par la chlorophylle, vers les sources 11 à 13 qui seront détectés par le détecteur 21. En effet, dans ce deuxième mode de réalisation, le détecteur 21 est prévu pour détecter la fluorescence émise vers la face avant 31 de la feuille pour mesurer la teneur en polyphénols 34.

Quelque soit le mode de réalisation, les longueurs d'onde de chacune des sources 11 à 13 sont choisies en fonction des bandes d'absorption des composés à mesurer, de leurs caractéristiques techniques comme la pureté spectrale ou leur puissance, de leur disponibilité commerciale et de leur coût, et de la disponibilité commerciale et du coût du ou des filtres F2 associés au détecteur 21.

Le premier et le deuxième mode de réalisation sont sensiblement équivalents car la fluorescence est isotrope. Le deuxième mode de réalisation est le mode de réalisation préféré et permet d'utiliser le système selon l'invention in situ et à distance du tissu biologique à caractériser. De plus, dans ce deuxième mode de réalisation le système selon l'invention peut être utilisé directement sur l'entité biologique de manière non destructive et non intrusive, c'est-à-dire sans avoir à réaliser de prélèvement d'un échantillon de tissu biologique.

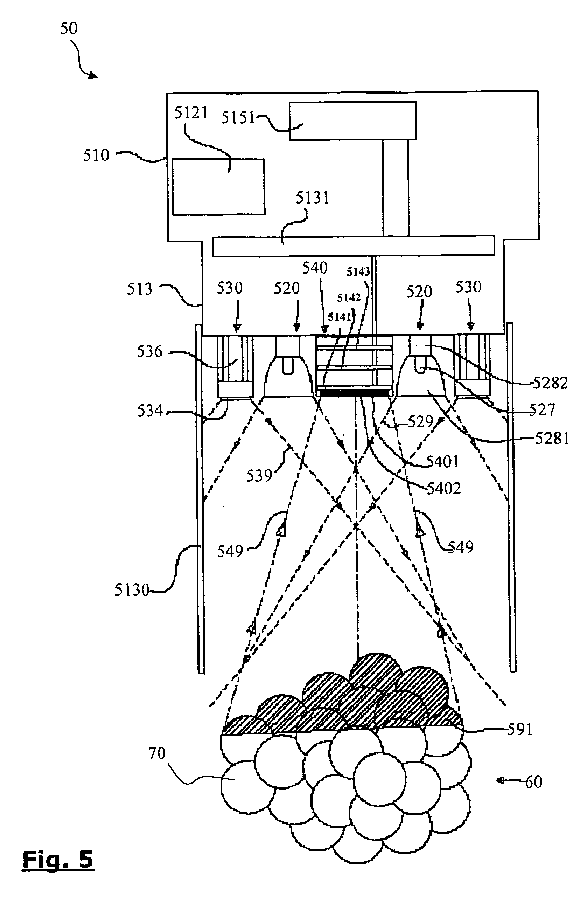

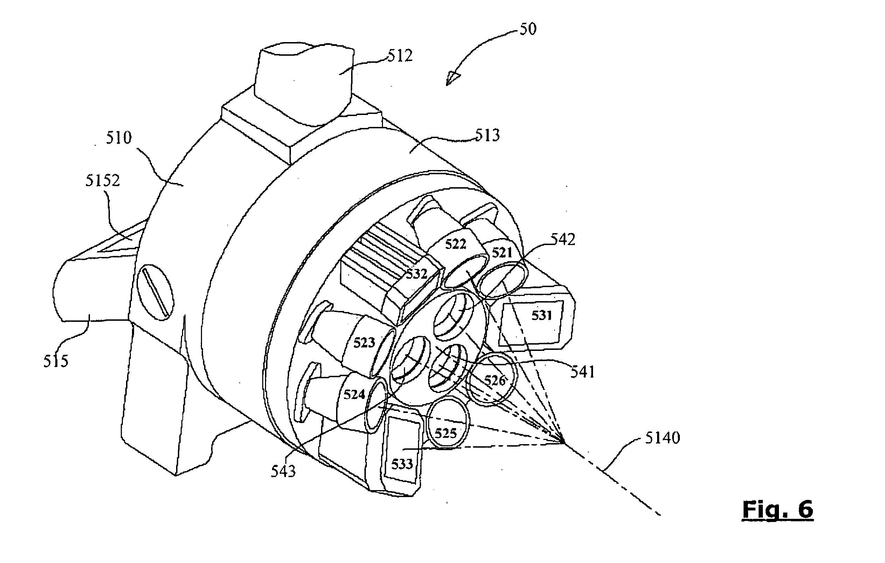

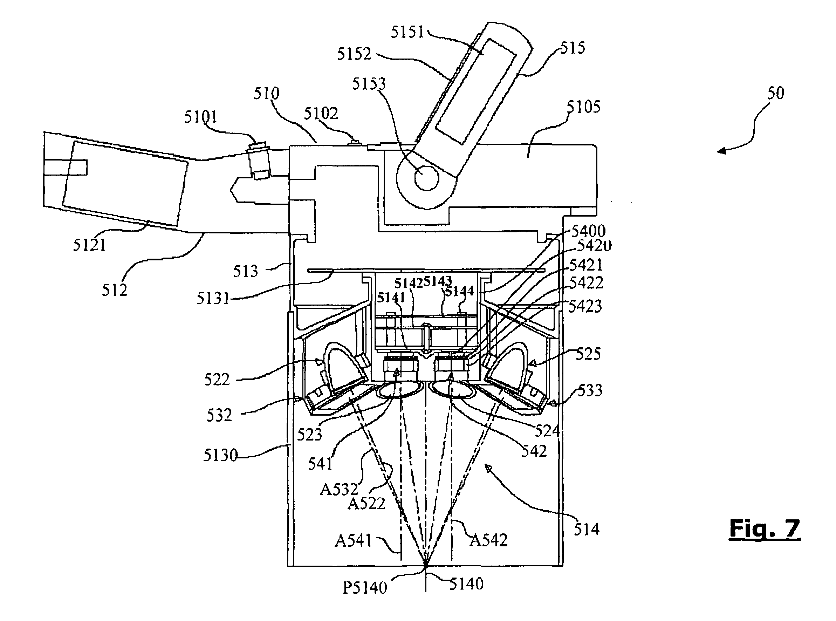

Les figures 5 à 7 donnes des représentations selon différentes vues d'un appareil 50 réalisé selon le deuxième mode de réalisation du système selon l'invention, ce deuxième mode de réalisation étant le mode de réalisation préféré du système selon l'invention. La figure 5 donne une représentation selon une vue en coupe face, la figure 6 donne une représentation selon une vue isométrique et la figure 7 donne une représentation selon une autre coupe de côté de l'appareil 50. L'appareil 50 permet de réaliser des mesures directement sur une grappe 60 de raisin comprenant une pluralité de baies 70.

Ce mode de réalisation, que nous appellerons MULTIPLEX®, est basé sur un boîtier 510 portable et alimenté par une batterie 5121 déportée ou intégré à la poignée, doté d'une face de mesure 514 et d'une interface utilisateur comprenant un écran 5152 et des organes de commandes tels que des boutons ou touches 5101 et 5102. Ce boîtier peut être tenu par une partie formant une poignée 512 contenant la batterie amovible 5121 ou le connecteur de la batterie portable déportée.

Ce boîtier 510 comprend aussi une partie cylindrique 513 s'étendant vers le côté opposé à l'interface et portant la face de mesure à son extrémité. La face de mesure 514 est entourée par un cache 5130 plus ou moins opaque et possiblement amovible, qui permet de diminuer les interférences de la lumière ambiante et de donner un repère quant à la distance de mesure optimale par rapport à la face de mesure 514.

Cette face de mesure 514 comprend un jeu 540 de détecteurs couvrant les longueurs d'onde de fluorescence à mesurer. Dans le mode de réalisation ici décrit, ce jeu 540 comprend trois détecteurs 541, 542 et 543 adjacents entre eux et regroupés en un triangle équilatéral au centre de la face de mesure 514. Ces trois détecteurs sont orientés selon des directions parallèles entre elles autour d'un axe de détection 5140, ou très légèrement convergentes autour de cet axe de détection 5140. Chacun de ces détecteurs 541, 542 et 543 comprend un élément de détection, ici une photodiode au silicium 5420 d'environ 2cm x 2cm, et détecte la lumière dans une bande de longueur d'onde déterminée, respectivement bleu-verte, rouge et rouge lointain. Cette bande de détection est obtenue par un filtre coloré ou passe-haut et un filtre interférentiel. La combinaison de ces deux types de filtres permet une meilleure filtration qui peut être nécessaire, en particulier, pour éviter aux détecteurs de recevoir des rayonnements émis par les sources d'excitation.

Il est à noter que les détecteurs reçoivent directement la fluorescence à mesurer, sans utiliser des optiques de collection, convergentes ou collimatées. Chaque détecteur ne nécessite qu'un seul élément de détection, la photodiode 5420 (figure 7), choisie suffisamment grande pour obtenir une bonne sensibilité qui permet de se passer d'optique de collection. Cet élément de détection reçoit ainsi un rayonnement 549 provenant de l'ensemble de la zone cible 591 illuminée par les émetteurs d'excitation.

Cet agencement permet d'utiliser des éléments de détection relativement simples, et d'éviter le besoin d'une optique de collection. Au delà de l'économie sur le coût de l'optique, on évite ainsi les contraintes d'encombrement, de réglage et de profondeur de champs.

La face de mesure 514 présente une surface périphérique conique concave portant plusieurs jeux d'émetteurs, pouvant émettre une lumière d'excitation dans différentes longueurs d'ondes, répartis en un cercle autour du jeu 540 de détecteurs.

Ces émetteurs comprennent un jeu d'émetteurs ultraviolets 520 comprenant six émetteurs UV 521 à 526, réparties à 120° en trois groupes de deux émetteurs adjacents, sur un cercle autour du jeu de détecteurs 540.

Chacune de ces sources comprend une source, ici une diode LED ultraviolette 527, placée dans un réflecteur parabolique 5281 formant un faisceau d'environ 30°. Les réflecteurs sont montés sur une embase 5282 déterminant la position de leur faisceau par rapport à l'axe de détection 5140. Alternativement, les émetteurs UV peuvent aussi utiliser un dispositif dioptrique ou catadioptrique pour améliorer la convergence du faisceau émis.

Les émetteurs comprennent aussi un jeu d'émetteurs de lumière visible 530, comprenant trois émetteurs 531, 532 et 533 répartis à 120° autour du jeu 540 de détecteurs selon le même cercle que le jeu d'émetteurs UV 520 et intercalées avec les émetteurs UV. Chacun de ces émetteurs de lumière visible comprend une source comprenant une matrice de diodes LED de couleurs rouge, verte et bleue intercalées, intégrées dans un composant commun 534 d'environ 4,5cm de côté et d'une puissance de 3x15W, et recouvertes d'une plaque de plastique transparent formant une matrice de microlentilles convergentes. Ce composant commun 534 est monté sur une cale 536 formant radiateur, et dont la forme détermine l'orientation de la source par rapport à l'axe de détection 5140. L'émetteur comprend aussi un filtre coloré passe bande large, permettant de restreindre les émissions dans les longueurs d'onde utilisées pour la détection de fluorescence, en particulier vers le rouge lointain.

Alternativement aux sources RGB (rouge-vert-bleu) ici décrites, des sources d'excitations monochromes peuvent aussi être utilisées, par exemple des sources de couleur ambre sous la forme d'une matrice LED monochrome de forte puissance, de l'ordre de 200W en continu.

Les émetteurs d'excitation sont orientés de façon à obtenir un éclairage uniforme de la zone cible 591, même lorsqu'il s'agit d'un objet hétérogène et/ou en trois dimensions.

Dans des modes de réalisation pour des applications à distance courte, par exemple utilisant une excitation UV, les faisceaux des émetteurs sont orientés de façon à converger vers l'axe ou les axes A541, A542 et A543 des détecteurs 541, 542 et 543. Plus particulièrement, les axes A522, A532 des faisceaux d'excitation sont concourants entre eux et avec l'axe de détection 5140 en un même point P5140, à une distance optimale pour la mesure. Dans le mode de réalisation décrit, le point de convergence P5140 se situe entre 10 et 20cm du jeu 540 de détecteurs, par exemple aux environs de 15cm.

Le fait que les faisceaux émis ne sont pas collimatés et présentent une certaine ouverture ou divergence permet de limiter les contraintes pesant sur la distance de mesure. En effet, tant que la cible, ici une grappe de raisin 60, se trouve à l'intérieur des faisceaux 529 et 539 des émetteurs, elle sera éclairée de façon homogène sur ses différentes faces dirigées vers le jeu 540 de détecteurs. La fluorescence 549 émise vers les détecteurs sera ainsi suffisamment stable et homogène pour fournir des mesures fidèles de la zone mesurée 591.

Ainsi, bien que les mesures utilisant les émetteurs UV se fassent à une distance d'environ 15cm, les mesures n'utilisant que les émetteurs en lumière visible peuvent s'effectuer à des distances plus importantes, voire jusqu'aux environs de 1m, par exemple pour une mesure des anthocyanes.

Dans d'autres modes de réalisation, les faisceaux des émetteurs peuvent être orientés de façon à être parallèles à l'axe de détection, par exemple pour des applications de mesure à une distance importante.

La figure 7 illustre plus particulièrement la structure du dispositif dans ce mode de réalisation de l'invention. La partie cylindrique 513 du boîtier renferme une carte électronique 5131 sensiblement annulaire, comprenant les circuits d'alimentation des sources d'excitation, le circuit de gestion des impulsions d'excitation et un circuit réalisant un générateur de courant.

Les détecteurs, et l'électronique qui va avec, sont regroupés dans un module de détection 5400 cylindrique, placé sur la face de mesure 514 au centre du cercle formé par les émetteurs d'excitation et s'étendant dans la direction de la cible à analyser. La face externe de ce cylindre porte les trois détecteurs 541, 542 et 543.

Cet agencement permet de placer les détecteurs sensiblement au même niveau que les extrémités des émetteurs pour qu'ils disposent d'un champ de réception large et permet ainsi de se rapprocher de la cible.

Le module de détection 5400 comprend trois petites cartes électroniques 5141, 5142, 5143 essentiellement analogiques, sensiblement circulaires, empilées le long de son axe longitudinal, fixées et espacées par des colonnettes 5144.

La première petite carte électronique 5141, située du côté de la face externe du module de détection 5400, porte les éléments de détection, ici des photodiodes au silicium. Pour chacun de ces détecteurs, la photodiode au silicium 5420 reçoit la lumière à détecter à travers un filtre coloré ou passe-haut 5421 et un filtre interférentiel 5422 fixés de façon amovible par un écrou de blocage 5423 dans une ouverture cylindrique de 25,4mm, pouvant ainsi recevoir des filtres standards de un pouce ou de 25mm.

En s'éloignant de la face de mesure 514, la deuxième petite carte électronique 5142 porte les circuits et amplificateurs réalisant la réjection de la lumière ambiante par boucle de contre-réaction.

La troisième petite carte électronique 5143 porte des circuits et composants contenant en particulier des échantillonneurs-bloqueurs.

Le module de détection 5400 constitue un ensemble compact qui peut être démonté du boîtier 510, par exemple pour maintenance ou pour être remplacé par un module caméra ou un module incluant un ou plusieurs guides optiques.

Ce module de détection est connecté, à travers l'ouverture de la grande carte électronique 5131, à un module de traitement 5151 situé du côté de l'interface et comprenant tout ou partie des moyens de traitement : en particulier une centrale d'acquisition et des moyens de calcul.

Ce module de traitement est compris dans une partie 515 du boîtier portant l'écran 5152 et pouvant être inclinée pour une bonne lisibilité, et escamotée dans un logement 5105 à l'intérieur du boîtier 510. Ce module de traitement peut comporter une connexion détachable lui permettant d'être échangé facilement, par exemple pour une mise à jour ou un changement de fonction.

L'électronique 5131 liée à l'excitation, celle 5141 à 5143 liée à la détection, et le module de traitement 5151 sont ainsi agencées en modules électroniques différents et séparés, permettant une maintenance simplifiée. Ces modules sont en outre séparés par une certaines distance, ici 2cm et par exemple au moins 1,5cm, ce qui permet de mieux dissiper la chaleur générée et de limiter les risques d'interférences entre les circuits qu'ils comportent.

Dans le mode de réalisation ici décrit, la détection est synchronisée sur l'excitation qui est émise par les émetteurs d'excitation. Une fréquence d'excitation de 1kHz avec des impulsions de 520 microsecondes a été utilisée avec succès, et permet un traitement en temps réel au fur et à mesure d'un parcours sur le terrain. Les différentes mesures de fluorescence nécessaires à l'établissement de la teneur ou de l'indice programmé sont entrelacées au sein de la période de mesure.

Ainsi les moyens de gestion et de traitement sont agencés pour :

- émettre un signal pour commander les émetteurs par impulsions,
- détecter les pics de fluorescence générée par ces impulsions grâce à des amplificateurs qui réalisent la réjection de la lumière ambiante par une boucle de contre-réaction,
- commander, par exemple par le même signal de commande, le traitement du signal de détection de fluorescence par les échantillonneurs bloqueurs ; et
- fournir une mesure analogique de la mesure de fluorescence à la centrale d'acquisition.

Dans d'autres modes de réalisation, il est prévu une détection synchrone utilisant la modulation de phase entre l'excitation et la détection. Les moyens de gestion et de traitement sont alors agencés pour :

- commander les émetteurs selon une fréquence incluant une modulation de phase,
- traiter le signal de détection de fluorescence en démodulation de phase et fournir la mesure de fluorescence.

Nous allons maintenant décrire la détermination de la teneur en anthocyanes (ANTH) de la peau d'une baie de raisin selon le premier aspect de l'invention et à distance variable.

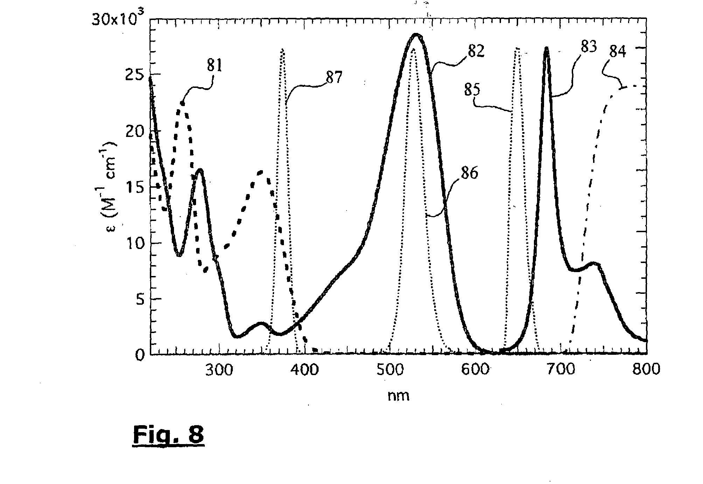

La figure 8 donne le spectre d'absorption 82 de la malvidine glycoside qui est l'anthocyane majoritaire du raisin, dans du méthanol à 50 % acidifié, en unité de coefficients d'extinction; le spectre d'émission 83 de la chlorophylle et le spectre de transmission 84 du filtre F2 qui est un filtre Schott RG9.

La source 11 est une source émettant un rayonnement 111 dans le vert (GREEN), dont la longueur d'onde se situe dans une bande d'absorption des anthocyanes et qui induit la fluorescence de la chlorophylle 33 et provoque l'émission d'un rayonnement de fluorescence 112. La longueur d'onde de cette source 111 peut par exemple être autour de 530 nm. La figure 8 donne le spectre 86 du rayonnement 11. Un exemple d'une source GREEN est la diode NS530L de chez Roithner Lasertechnik.

La source 12 émet un rayonnement 121 dans le rouge (RED), où les anthocyanes n'absorbent pas ou peu, qui induit la fluorescence de la chlorophylle 33 et provoque l'émission d'un rayonnement de fluorescence 122, et qui sert de référence pour la mesure de la teneur en anthocyanes. La longueur d'onde de cette source est préférentiellement à 650 nm. La figure 8 donne le spectre 85 du rayonnement 121.

Par ailleurs la source 13 émet un rayonnement 131 dans le bleu (BLUE), où les anthocyanes absorbent peu, qui induit la fluorescence de la chlorophylle 33 et provoque l'émission d'un rayonnement de fluorescence 132, et qui sert de rayonnement supplémentaire pour la mesure de la teneur en anthocyanes. La longueur d'onde de cette source est préférentiellement à 450 nm. La figure 8 donne le spectre 87 du rayonnement 12.

Les sources 11, 12 et 13 éclairent successivement le tissu 30 par émission respectivement d'un rayonnement 111, 121 et 131. Le rayonnement 111 est absorbé en quantité variable par l'épiderme de la peau suivant son contenu en anthocyanes 34, tandis que les rayonnements rouge 121 et bleu 131 ne sont pas absorbés ou peu absorbés. Tous les rayonnements 111, 121 et 131 induisent la fluorescence de la chlorophylle 33 qui émet alors respectivement des rayonnements de fluorescence 112, 122 et 132 dans le rouge et le proche infrarouge, dont les intensités sont proportionnelles aux intensités des rayonnements 111, 121 et 131 reçues par la chlorophylle 33. La mesure du rapport des émissions de fluorescence excitées par la source 11 et par la source 12 permet de déterminer la teneur en anthocyanes de la peau d'une baie de raisin. De plus la mesure du rapport des émissions de fluorescence excitées par la source 12 et par la source 13 permet de déterminer si le rayonnement de référence 12 est affecté par les anthocyanes dont la teneur augmente dans le temps. Lorsque la teneur en anthocyanes d'une baie de raisin augmente, le rayonnement 111 est trop absorbé et commence à être saturé. De plus, les anthocyanes commencent aussi à affecter le rayonnement de référence. Dans ce cas, pour réaliser des mesures au-delà de la saturation causée par une trop grande concentration des anthocyanes, le rayonnement 121, qui était le rayonnement de référence avant la saturation, devient le rayonnement de mesure après la saturation et le rayonnement 131, qui était le rayonnement supplémentaire avant la saturation, devient le rayonnement de référence après la saturation. Le rayonnement 111 ne sert plus dans la mesure. Ainsi, la mesure de la teneur en anthocyanes peut alors être réalisée au-delà de la saturation.

La teneur en anthocyane est ensuite calculée selon l'expression suivante :

$$\text{ANTH}_{\text{avant saturation}} = \text{logFER\_ANTH\_GREEN} - \text{logFER\_CHL}_G$$

$$\text{ANTH}_{\text{après saturation}} = C + \text{logFER\_ANTH\_RED} - \text{logFER\_CHL}_R$$

avec

1. logFER_ANTH_GREEN = log (FRFred/FRFgreen)
2. logFER_ANTH_RED = log (FRFblue/FRFred) et
3. logFER_CHL$_G$ = log (FRFred/FRFgreen)
4. logFER_CHL$_R$ = log (FRFbleu/FRFred)

Dans ces expressions logFER_CHL$_G$=log(FRFred/FRFgreen) et logFER_CHL$_R$=log(FRFbleu/FRFred), les quantités logFER_CHL$_G$ et logFER_CHL$_R$ étant mesurées avant l'apparition des anthocyanes dans la peau de la baie du raisin, ANTH est le contenu en anthocyanes de la peau d'une baie de raisin en nanomoles/cm$^2$, FRFgreen, FRFred et FRFblue sont respectivement les intensités de rayonnements de fluorescence 112, 122 et 132 induits par les rayonnement 111, 121 et 131 et C est une constante telle que ANTH$_{après}$ saturation est égal à ANTH$_{avant}$ saturation au moment de la saturation.

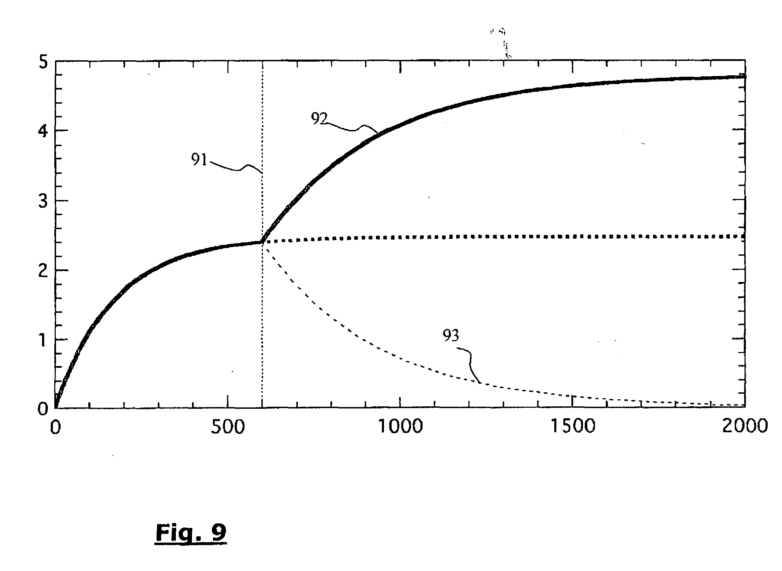

La figure 9 donne un graphe représentant l'évolution de la teneur mesurée en anthocyanes, dans la peau d'une baie de raisin, déterminée selon le premier aspect de l'invention. L'axe 91 désigne le moment à partir duquel on réalise la compensation de la saturation. La courbe 92 montre les résultats obtenus avec compensation de la saturation selon l'invention c'est-à-dire en considérant le rayonnement de référence avant la saturation comme rayonnement de mesure après la saturation et le rayonnement supplémentaire avant la saturation comme rayonnement de référence après la saturation. La courbe 93 montre les résultats obtenus sans compensation de la saturation. Ainsi, on remarque que sans compensation de la saturation on obtient une courbe 93 décroissante après la saturation alors que la teneur en anthocyanes continue d'augmenter. Avec la compensation on obtient bien une courbe 92 croissante témoin de l'augmentation de la teneur en anthocyanes de la peau d'une baie de raisin.

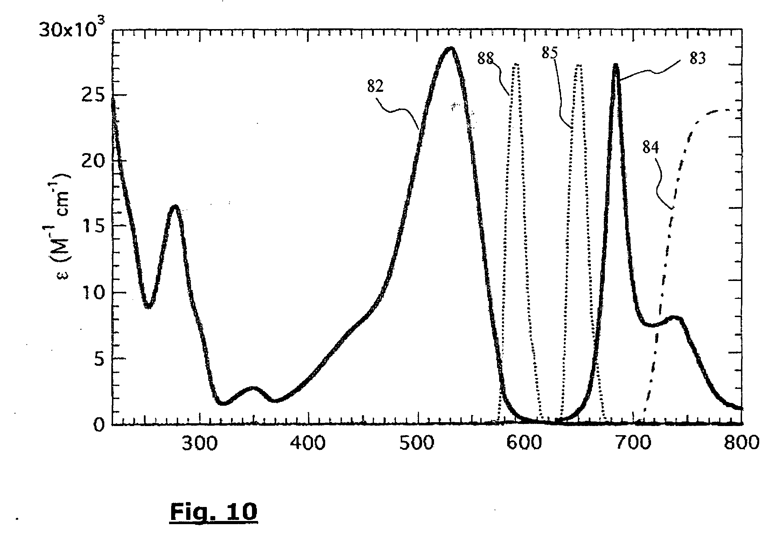

Nous allons maintenant décrire la détermination de la teneur en anthocyanes de la peau d'une baie de raisin selon le deuxième aspect de l'invention et à distance variable. Selon ce deuxième aspect la longueur d'onde du rayonnement 121 reste inchangée à 650nm. Par contre la longueur d'onde du rayonnement 111 est choisie à 590nm. Cette longueur d'onde correspond à une plus faible absorption des anthocyanes que la longueur d'onde 530nm choisie selon le premier aspect de l'invention et qui correspond au pic d'absorption des anthocyanes. La figure 10 donne le spectre d'absorption 82 de la malvidine glycoside qui est l'anthocyane dont on veut déterminer la teneur, dans du méthanol à 50 % acidifié, en unité de coefficients d'extinction, le spectre 83 d'émission de la chlorophylle et le spectre de transmission 84 du filtre F2, ainsi que le spectre 85 du rayonnement 121 et le spectre 88 du rayonnement 111 utilisé dans ce deuxième aspect de l'invention.

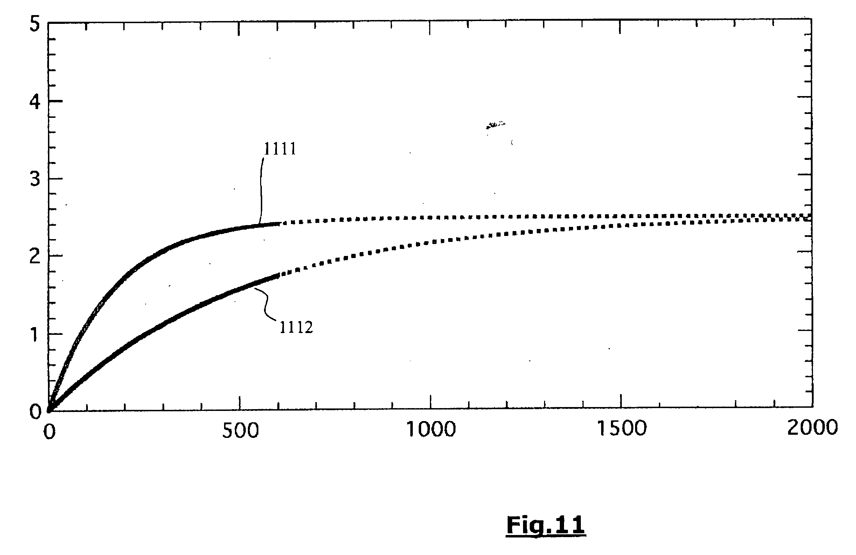

Le principe de mesure dans ce deuxième aspect de l'invention est sensiblement similaire au principe de mesure dans le premier aspect de l'invention. Les sources 11 et 12 éclairent successivement le tissu 30 par émission respectivement des rayonnements 111 et 121. Le rayonnement 111 est absorbé en quantité variable par l'épiderme de la peau suivant son contenu en anthocyanes 34, tandis que le rayonnement rouge 121 ne l'est pas. Ces rayonnements 111 et 121 induisent la fluorescence de la chlorophylle 33 qui émet alors respectivement des rayonnements de fluorescence 112 et 122 qui sont mesurés. Cependant, comme la longueur d'onde choisie, 590nm, pour le rayonnement 121 correspond à une plus faible absorption que la longueur d'onde, 530nm, du rayonnement 121 choisie dans le premier aspect de l'invention décrit ci-dessus, aucune saturation ne se produit du fait de l'augmentation de la teneur des anthocyanes dans la peau de la baie de raisin. La figure 11 donne une représentation :

- d'une première courbe 1111 montrant l'évolution de la mesure réalisée avec un rayonnement 121 de longueur d'onde de 530nm en fonction de la teneur en anthocyanes de la peau d'une baie de raisin, et
- d'une deuxième courbe 1112 montrant l'évolution de la mesure réalisée avec un rayonnement 121 de longueur d'onde de 590nm en fonction de la teneur en anthocyanes de la peau d'une baie de raisin.

La longueur d'onde 590nm correspond à une plus faible absorption des anthocyanes que la longueur d'onde 530nm. On remarque que pour la longueur d'onde 530nm, courbe 1111, une saturation se produit très rapidement alors que pour la longueur d'onde 590nm, courbe 1112, aucune saturation ne se produit. De plus dans le cas de la courbe 1112 on obtient des résultats plus linaires que dans le cas de la courbe 1111.

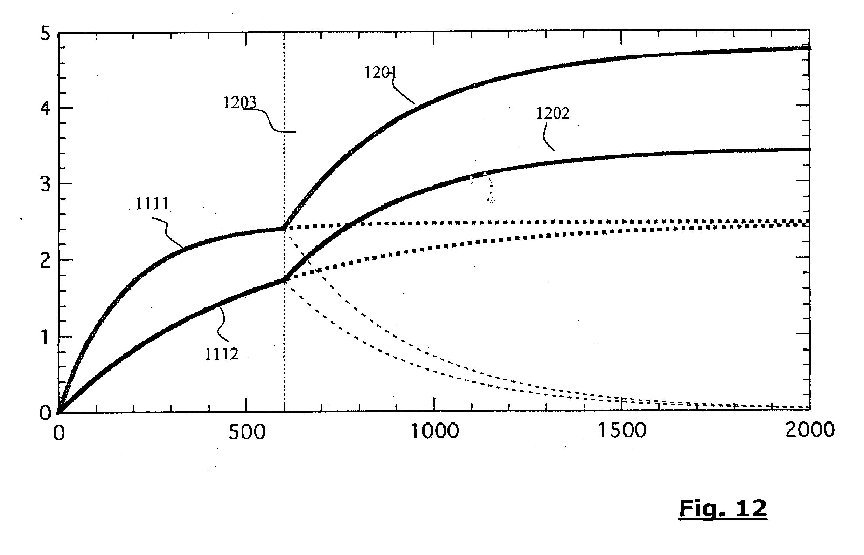

Avantageusement, le premier et le deuxième aspect de l'invention peuvent être combinés. En effet, le rayonnement supplémentaire 131 décrit ci-dessus peut être utilisé pour déterminer si le rayonnement de référence 121 est affecté ou pas par les anthocyanes. Lorsque la concentration ou la teneur de anthocyanes est telle qu'une saturation se produit même avec un rayonnement 111 a une longueur d'onde décalée par rapport au pic d'absorption, par exemple 590nm, on peut considérer le rayonnement 121, qui était le rayonnement de référence avant la saturation, comme rayonnement de mesure après la saturation et le rayonnement 131, qui était le rayonnement supplémentaire avant la saturation, comme rayonnement de référence après la saturation. La figure 12 montre les résultats obtenus en combinant le premier et le deuxième aspect de l'invention. La courbe 1201 correspond aux résultats des mesure réalisées avec :

- un rayonnement 111 de 530nm,
- un rayonnement 121 de 650nm, et
- un rayonnement 131 de 450nm ;

et la courbe 1202 correspond aux résultats obtenus avec :

- un rayonnement 111 de 590nm ;

- un rayonnement 121 de 630, et
- un rayonnement 131 de 450nm.

L'axe 1203 désigne le moment à partir duquel on réalise la compensation de la saturation selon le premier aspect de l'invention.

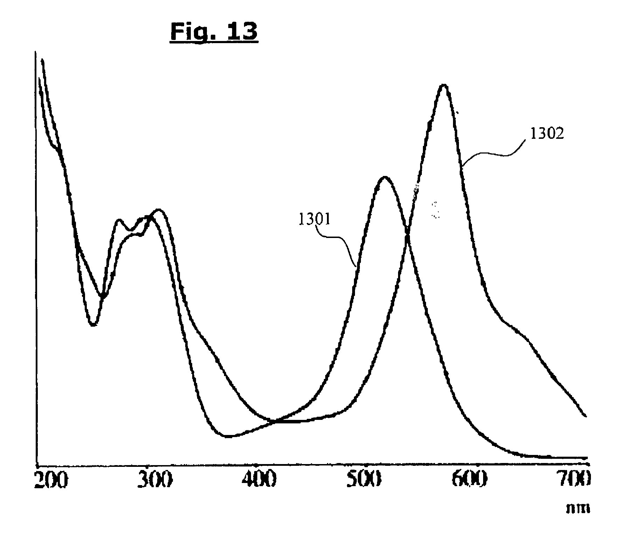

Par ailleurs, les longueurs d'onde des rayonnements 111, 121 et 131 peuvent être modifiées en fonction de l'évolution du pH dans le tissu biologique que l'on veut caractériser. La figure 13 montre le spectre 1301 d'absorption des anthocyanes à pH=1, et le spectre 1302 d'absorption des anthocyanes à pH=8. On remarque que lorsque le pH augmente le pic d'absorption se décale vers une longueur d'onde plus élevée. Cette variation du spectre d'absorption peut être prise en compte dans la compensation de la saturation quelque soit l'aspect de l'invention mis en oeuvre.

Nous allons maintenant décrire de manière concise, la mesure de la teneur en flavonols (FLAV) de la peau d'une baie de raisin, selon le troisième aspect de l'invention. La source 11 est dans ce as une source émettant un rayonnement 111 dans l'ultraviolet (UV), dont la longueur d'onde se situe dans une bande d'absorption des flavonols et qui induit la fluorescence de la chlorophylle 33 et provoque l'émission d'un rayonnement de fluorescence 112. La longueur d'onde de cette source 11 peut par exemple être autour de 375nm. La source 12 peut alors émettre un rayonnement de référence 121 à 650nm qui correspond à une longueur d'onde non absorbée par les flavonols. Lorsque le rayonnement de mesure 111 est saturé par la teneur en flavonols de la peau alors, on peut utiliser comme rayonnement de mesure un rayonnement à 450nm, correspondant à une plus faible absorption sur le spectre d'absorption des flavonols. Ce rayonnement à 450nm peut par exemple être émis par la source 13. Le rayonnement de référence n'est pas modifié et reste à 650 nm

L'invention peut aussi être mise en oeuvre pour la mesure de la teneur d'autres composés chromophores et peu pas fluorescents tels que les lycopènes dans le cas par exemple des tomates.

L'invention n'est pas limitée à l'exemple détaillé ci-dessus et peut être utilisée pour caractériser un tissu biologique de tout type.

## Revendications

1.  Procédé pour déterminer la teneur en un composé chromophore et non fluorescent (34), dit premier composé, d'un tissu (30) d'une entité biologique, ledit tissu biologique (30) comprenant en outre un composé chromophore et fluorescent (33), dit deuxième composé, ledit procédé comprenant au moins une itération des opérations suivantes :

    - émission par des moyens d'émission (11,12), en direction dudit tissu (30), d'un premier rayonnement optique (111), dit de mesure, et d'un deuxième rayonnement optique (121), dit de référence, chacun choisi de manière à induire un rayonnement de fluorescence dudit deuxième composé (33), chacun desdits premier et deuxième rayonnements (111, 121) étant partiellement absorbé par ledit premier composé (34),
    - mesure, par des moyens de mesure (21,22), desdits rayonnements de fluorescence (112, 122) induits par lesdits premier et deuxième rayonnements (111, 121), et
    - détermination, à partir de ladite mesure, de la teneur en ledit premier composé (34) dudit tissu (30) ;

    caractérisé en ce que ledit procédé comprend en outre au moins une compensation d'une saturation de mesure due à une trop grande absorption dudit rayonnement de mesure (111) par ledit premier composé (34), ladite compensation comprenant un choix, pour ledit rayonnement de mesure d'une longueur d'onde correspondant à une plus faible absorption dans le spectre d'absorption du premier composé (34).

2.  Procédé selon la revendication 1, caractérisé en ce qu'il comprend en outre une émission, par les moyens d'émission (13), en direction dudit tissu biologique (30), d'un troisième rayonnement optique (131), dit supplémentaire, choisi de manière à induire un rayonnement de fluorescence (132) dudit deuxième composé (33), ledit procédé comprenant en outre une mesure du rayonnement de fluorescence (132) induit par ledit rayonnement supplémentaire (131), ladite mesure étant utilisée pour déterminer si le rayonnement de référence (121) est affecté ou non par le premier composé (34).

3.  Procédé selon la revendication 2, caractérisé en ce que, lorsque la teneur du tissu biologique (30) en premier composé (34) affecte le rayonnement de référence (121), la longueur d'onde choisie pour le rayonnement de mesure (111) après saturation correspond à une longueur d'onde située autour de la longueur d'onde du rayonnement de référence (121) avant saturation.

4.  Procédé selon la revendication 3, caractérisé en ce qu'il comprend, lorsque la distance entre le tissu biologique (30) et les moyens d'émission (11, 12, 13) et les moyens de mesure (21) n'est pas fixe, un choix d'une nouvelle longueur d'onde pour le rayonnement de référence après saturation, ladite nouvelle longueur d'onde étant moins affectée par la teneur en premier composé.

5. Procédé selon la revendication 4, **caractérisé en ce que** lorsque la distance entre le tissu biologique (30) et les moyens d'émission (11, 12,13) et les moyens de mesure (21, 22) n'est pas fixe, la nouvelle longueur d'onde choisie pour le rayonnement de référence après saturation correspond à une longueur d'onde qui se situe autour de la longueur d'onde du rayonnement supplémentaire (131).

6. Procédé selon l'une quelconque des revendications précédentes, **caractérisé en ce que**, lorsque la longueur d'onde de référence (121) n'est pas affectée par la teneur en premier composé (34) du tissu biologique (30), la longueur d'onde choisie pour le rayonnement de mesure (111) correspond à une plus faible absorption par le premier composé (34) qu'une longueur d'onde, dite limite, pour laquelle une saturation potentielle se produirait pour une teneur maximale prévue du premier composé (34) dans le tissu biologique (30).

7. Procédé selon l'une quelconque des revendications précédentes, **caractérisé en ce qu'**il comprend une modification de la longueur d'onde du rayonnement de mesure (111) et/ou du rayonnement de référence (121) en fonction d'une caractéristique physicochimique ayant une influence sur le spectre d'absorption du premier composé (34) et/ou sur le spectre de fluorescence du deuxième composé (33).

8. Procédé selon l'une quelconque des revendications précédentes, **caractérisé en ce qu'**au moins l'un des rayonnements de référence (121) et de mesure (111) est émis à une intensité prédéterminée et l'autre rayonnement est émis à une intensité variable de manière à ce que les rayonnements de fluorescence induits (122, 112) par chacun desdits rayonnements de référence (121) et de mesure (111) soient égaux en intensité.

9. Procédé selon la revendication 8, **caractérisé en ce que** l'intensité du rayonnement de mesure est ajustée en fonction d'un signal, dit de commande, relatif aux rayonnements de fluorescences induits, d'une part par le rayonnement de mesure et d'autre part par le rayonnement de référence.

10. Procédé selon l'une quelconque des revendications précédentes, **caractérisé en ce que** les intensités du rayonnements de mesure (111) et de référence (121) varient de manière alternée, en décalage de phase, à une fréquence prédéterminée.

11. Procédé selon l'une quelconque des revendications précédentes, **caractérisé en ce qu'**il comprend une synchronisation des rayonnements (111, 121, 131) par modulation de phase.

12. Procédé selon l'une quelconque des revendications précédentes, **caractérisé en ce que** chacun des rayonnements de mesure (111) et de référence (121) est émis sous forme d'impulsions.

13. Procédé selon l'une quelconque des revendications précédentes, **caractérisé en ce que** la détermination de la teneur du premier composé (34) comprend un calcul du rapport :

$$\frac{\text{fluorescence induite par le rayonnement de référence (121)}}{\text{fluorescence induite par le rayonnement de mesure (111)}}.$$

14. Procédé selon l'une quelconque des revendications précédentes, **caractérisé en ce qu'**il comprend une détermination de l'évolution, dans le temps, de la teneur en premier composé (34) du tissu biologique (30).

15. Procédé selon l'une quelconque des revendications 4 à 14, **caractérisé en ce que** le tissu biologique est la peau d'une baie de raisin et le deuxième composé est la chlorophylle :

- lorsque le premier composé est un anthocyane :

o la longueur d'onde du rayonnement de mesure avant saturation est entre 500 et 600nm,
o la longueur d'onde du rayonnement de référence avant saturation est entre de 600 et 700nm,
o la longueur d'onde du rayonnement supplémentaire est entre 400 et 500 nm,

o la longueur d'onde du rayonnement de mesure après saturation est entre 600 et 700nm,
o la longueur d'onde du rayonnement de référence après saturation est entre 400 et 500nm ; et

- lorsque le premier composé est un flavonol :

o la longueur d'onde du rayonnement de mesure avant saturation est entre 300 et 400nm,
o la longueur d'onde du rayonnement de référence avant saturation est entre 600 et 700nm,
o la longueur d'onde du rayonnement de mesure après saturation est entre 400 et 500nm,
o la longueur d'onde du rayonnement de référence après saturation est entre 600 et 700nm.

**Claims**

1. Method for determining the content of a non-fluorescent chromophorous compound (34), called the first compound, in a tissue (30) of a biological entity, said biological tissue (30) comprising moreover a fluorescent chromophorous compound (33), called the second compound, said method comprising at least one iteration of the following operations:

- emission by emission means (11, 12), in the direction of said tissue (30), of a first so-called measurement optical radiation (111), and a second so-called reference optical radiation (121), each chosen so as to induce a fluorescence radiation of said second compound (33), each of said first and second radiations (111, 121) being partially absorbed by said first compound (34),
- measurement, by measurement means (21, 22), of said fluorescence radiations (112, 122) induced by said first and second radiations (111, 121), and
- determination, from said first measurement, of the content of said first compound (34) in said tissue (30).

**characterized in that** said method comprises moreover at least one compensation of a measurement saturation due to too high an absorption of said measurement radiation (111) by said first compound (34), said compensation comprising a choice, for said measurement radiation, of a wavelength corresponding to a lower absorption in the absorption spectrum of the first compound (34).

2. Method according to claim 1, **characterized in that** it comprises moreover an emission, by the emission means (13), in the direction of said biological tissue (30), of a third so-called additional optical radiation (131), chosen so as to induce a fluorescence radiation (132) of said second compound (33), said method comprising moreover a measurement of the fluorescence radiation (132) induced by said additional radiation (131), said measurement being used for determining whether the reference radiation (121) is affected or not by the first compound (34).

3. Method according to claim 2, **characterized in that**, when the content of the biological tissue (30) in the first compound (34) affects the reference radiation (121), the wavelength chosen for the measurement radiation (111) after saturation corresponds to a wavelength situated around the wavelength of the reference radiation (121) before saturation.

4. Method according to claim 3, **characterized in that** it comprises, when the distance between the biological tissue (30) and the emission means (11, 12, 13) and the measurement means (21) is not fixed, a choice of a new wavelength for the reference radiation after saturation, said new wavelength being less affected by the content of the first compound.

5. Method according to claim 4, **characterized in that** when the distance between the biological tissue (30) and the emission means (11, 12, 13) and the measurement means (21, 22) is not fixed, the new wavelength chosen for the reference radiation after saturation corresponds to a wavelength which is situated around the wavelength of the additional radiation (131).

6. Method according to any one of the previous claims, **characterized in that**, when the reference wavelength (121) is not affected by the content of the first compound (34) in the biological tissue (30), the wavelength chosen for the measurement radiation (111) corresponds to a lower absorption by the first compound (34) than a so-called limit wavelength, for which a potential saturation would be produced for an expected maximum content for the first compound (34) in the biological tissue (30).

7. Method according to any one of the previous claims, **characterized in that** it comprises a modification of the wavelength of the measurement radiation (111) and/or of the reference radiation (121) as a function of a physicochemical characteristic having an influence on the absorption spectrum of the first compound (34) and/or on the fluorescence spectrum of the second compound (33).

8. Method according to any one of the previous claims, **characterized in that** at least one of the reference radiations (121) and the measurement radiations (111) is emitted at a predetermined intensity and the other radiation is emitted at a variable intensity so that the fluorescence radiations induced (122, 112) by each of said reference radiations (121) and measurement radiations (111) are of equal intensity.

9. Method according to claim 8, **characterized in that** the intensity of the measurement radiation is adjusted according to a so-called control signal, relating to the fluorescence radiations induced, on the one hand by the measurement radiation and on the other hand by the reference radiation.

10. Method according to any one of the previous claims, **characterized in that** the intensities of the measurement radiations (111) and the reference radiations (121) vary alternately, by phase shifting, at a predetermined frequency.

11. Method according to any one of the previous claims, **characterized in that** it comprises a synchronization of the radiations (111, 121, 131) by phase modulation.

12. Method according to any one of the previous claims, **characterized in that** each of the measurement radiations (111) and reference radiations (121) is emitted in the form of pulses.

13. Method according to any one of the previous claims, **characterized in that** the determination of the content of the first compound (34) comprises a calculation of the ratio:

$$\frac{\text{fluorescence induced by the reference radiation } (121)}{\text{fluorescence induced by the measurement radiation } (111)} .$$

14. Method according to any one of the previous claims, **characterized in that** it comprises a determination of the development, over time, of the content of the first compound (34) in the biological tissue (30).

15. Method according to any one of claims 4 to 14, **characterized in that** the biological tissue is the skin of a grape berry and the second compound is chlorophyll:

- when the first compound is an anthocyanin:

  - the wavelength of the measurement radiation before saturation is between 500 and 600 nm,
  - the wavelength of the reference radiation before saturation is between 600 and 700 nm,
  - the wavelength of the additional radiation is between 400 and 500 nm,
  - the wavelength of the measurement radiation after saturation is between 600 and 700 nm,
  - the wavelength of the reference radiation after saturation is between 400 and 500 nm; and

- when the first compound is a flavonol:

  - the wavelength of the measurement radiation before saturation is between 300 and 400 nm,
  - the wavelength of the reference radiation before saturation is between 600 and 700 nm,
  - the wavelength of the measurement radiation after saturation is between 400 and 500 nm,
  - the wavelength of the reference radiation after saturation is between 600 and 700 nm.

**Patentansprüche**

1. Verfahren zur Bestimmung des Gehalts einer farbgebenden und nicht fluoreszierenden Verbindung (34), genannt erste Verbindung, von einem Gewebe (30) einer biologischen Einheit, das vorgenannte biologische Gewebe (30) umfassend zudem eine farbgebende und fluoreszierende Verbindung (33), genannt zweite Verbindung, das vorgenannte Verfahren umfassend mindestens eine Iteration der folgenden Schritte:

- Emission einer ersten optischen Strahlung (111), genannt Messstrahlung, und einer zweiten optischen Strahlung (121), genannt Referenzstrahlung, durch Emissionsmittel (11, 12), in Richtung des vorgenannten Gewebes (30), wobei beide Strahlungen gewählt sind, um eine Fluoreszenzstrahlung der vorgenannten zweiten Verbindung (33) zu induzieren, und jede der vorgenannten ersten und zweiten Strahlung (111, 121) partiell durch die vorgenannte erste Verbindung (34) absorbiert wird,
- Messung der vorgenannten durch die vorgenannten ersten und zweiten Strahlungen (111, 112) induzierten Fluoreszenzstrahlungen (112, 122) durch Messmittel (21, 22), und
- Bestimmung des Gehalts der vorgenannten ersten Verbindung (34) von dem vorgenannten Gewebe (30) ausgehend von der vorgenannten Messung;
**dadurch gekennzeichnet, dass** das vorgenannte Verfahren weiter mindestens eine Kompensation von einer Sättigung der Messung aufgrund einer zu grossen Absorption der vorgenannten Messstrahlung (111) durch die vorgenannte erste Verbindung (34), umfasst, wobei die genannte Kompensation eine Wahl, für die vorgenannte Messstrahlung, von einer Wellenlänge entsprechend einer schwächeren Absorption im Absorptionsspektrum der ersten Verbindung (34) umfasst.

2.  Verfahren nach Anspruch 1, **dadurch gekennzeichnet, dass** es weiter eine Emission einer dritten optischen Strahlung (131), genannt Zusatzstrahlung, durch Emissionsmittel (13), in Richtung des vorgenannten Gewebes (30) umfasst, derart gewählt, dass eine Fluoreszenzstrahlung (132) der vorgenannten zweiten Verbindung (33) induziert wird, wobei das vorgenannte Verfahren weiter eine Messung der Fluoreszenzstrahlung (132), welche durch die vorgenannte Zusatzstrahlung (131) induziert wird, umfasst, wobei die vorgenannte Messung zur Bestimmung benutzt wird, ob die Referenzstrahlung (121) durch die erste Verbindung (34) beeinflusst wird.

3.  Verfahren nach Anspruch 2, **dadurch gekennzeichnet, dass**, wenn der Gehalt der ersten Verbindung (34) des biologischen Gewebes (30) die Referenzstrahlung (121) beeinflusst, die für die Messstrahlung (111) nach der Sättigung gewählte Wellenlänge einer Wellenlänge, die in der Nähe der Wellenlänge der Referenzstrahlung (121) vor der Sättigung ist, entspricht.

4.  Verfahren nach Anspruch 3, **dadurch gekennzeichnet, dass** es, wenn die Distanz zwischen dem biologischen Gewebe (30) und den Emissionsmitteln (11, 12, 13) und den Messmitteln (21) nicht fixiert ist, eine Wahl einer neuen Wellenlänge für die Referenzstrahlung nach der Sättigung umfasst, wobei die vorgenannte neue Wellenlänge weniger durch den Gehalt der ersten Verbindung beeinflusst ist.

5.  Verfahren nach Anspruch 4, **dadurch gekennzeichnet, dass**, wenn die Distanz zwischen dem biologischen Gewebe (30) und den Emissionsmitteln (11, 12, 13) und den Messmitteln (21, 22) nicht fixiert ist, die neue Wellenlänge, gewählt für die Referenzstrahlung nach der Sättigung, einer Wellenlänge entspricht, welche in der Nähe der Wellenlänge der Zusatzstrahlung (131) liegt.

6.  Verfahren nach einem der vorangehenden Ansprüche, **dadurch gekennzeichnet, dass**, wenn die Wellenlänge der Referenzstrahlung (121) nicht durch den Gehalt der ersten Verbindung (34) des biologischen Gewebes (30) beeinflusst wird, die für die Messstrahlung (111) gewählte Wellenlänge einer schwächeren Absorption durch die erste Verbindung (34) entspricht, als eine Wellenlänge, genannt Grenzwellenlänge, für welche eine potentielle Sättigung für einen vorgesehenen maximalen Gehalt der ersten Verbindung (34) des biologischen Gewebes (30) auftreten würde.

7.  Verfahren nach einem der vorangehenden Ansprüche, **dadurch gekennzeichnet, dass** es eine Änderung der Wellenlänge der Messstrahlung (111) und/oder der Referenzstrahlung (121) in Abhängigkeit von einer chemischphysikalischen Charakteristik, welche einen Einfluss auf das Absorptionsspektrum der ersten Verbindung (34) und/oder auf das Fluoreszenzspektrum der zweiten Verbindung (33) hat.

8.  Verfahren nach einem der vorangehenden Ansprüche, **dadurch gekennzeichnet, dass** wenigstens eine von der Referenzstrahlung (121) und Messstrahlung (111), mit einer vorbestimmten Intensität emittiert wird und die andere Strahlung mit einer variable Intensität emittiert wird, derart, dass die durch jede der Referenzstrahlung (121) und der Messstrahlung (111) induzierten Fluoreszenzstrahlungen (122, 112) in Intensität gleich sind.

9.  Verfahren nach Anspruch 8, **dadurch gekennzeichnet, dass** die Intensität der Messstrahlung in Abhängigkeit eines Signals, genannt Kontrollsignal, relativ zu den einerseits durch die Messstrahlung und andererseits durch die Referenzstrahlung induzierten Fluoreszenzstrahlungen, eingestellt ist.

10. Verfahren nach einem der vorangehenden Ansprüchen, **dadurch gekennzeichnet, dass** die Intensitäten der Messstrahlung (111) und der Referenzstrahlung (121) phasenverschoben mit einer vorbestimmten Frequenz auf alternierende Weise variieren.

11. Verfahren nach einem der vorangehenden Ansprüche, **dadurch gekennzeichnet, dass** es eine Synchronisation der Strahlungen (111, 112, 113) durch Phasenmodulation umfasst.

12. Verfahren nach einem der vorangehenden Ansprüche, **dadurch gekennzeichnet, dass** jeweils die Messstrahlung (111) und die Referenzstrahlung (121) in Form von Impulsen emittiert wird.

13. Verfahren nach einem der vorangehenden Ansprüchen, **dadurch gekennzeichnet, dass** die Bestimmung des Gehalts der ersten Verbindung (34) eine Berechnung des folgenden Verhältnisses umfasst:

$$\frac{\text{Fluoreszenz induziert durch die Referenzstrahlung (121)}}{\text{Fluoreszenz induziert durch die Messstrahlung (111)}}.$$

14. Verfahren nach einem der vorangehenden Ansprüche, **dadurch gekennzeichnet, dass** es eine Bestimmung der Entwicklung über die Zeit des Gehalts der ersten Verbindung (34) des biologischen Gewebes (30) umfasst.

15. Verfahren nach einem der Ansprüche 4 bis 14, **dadurch gekennzeichnet, dass** das biologische Gewebe die Haut einer Weinbeere und die zweite Verbindung Chlorophyll ist und:

- wenn die erste Verbindung ein Anthocyan ist, dann ist:

    o die Wellenlänge der Messstrahlung vor der Sättigung zwischen 500 und 600 nm,
    o die Wellenlänge der Referenzstrahlung vor der Sättigung zwischen 600 und 700 nm,
    o die Wellenlänge der Zusatzstrahlung zwischen 400 und 500 nm,
    o die Wellenlänge der Messstrahlung nach der Sättigung zwischen 600 und 700 nm,
    o die Wellenlänge der Referenzstrahlung nach der Sättigung zwischen 400 und 500 nm; und

- wenn die erste Verbindung ein Flavonol ist, dann ist:

    o die Wellenlänge der Messstrahlung vor der Sättigung zwischen 300 und 400 nm,
    o die Wellenlänge der Referenzstrahlung vor der Sättigung zwischen 600 und 700 nm,
    o die Wellenlänge der Messstrahlung nach der Sättigung zwischen 400 und 500 nm, und
    o die Wellenlänge der Referenzstrahlung nach der Sättigung zwischen 600 und 700 nm.

**Fig. 1**

## Fig. 2

EP 2 179 270 B1

Fig. 3

**Fig. 4**

**Fig. 5**

Fig. 7

**Fig. 8**

EP 2 179 270 B1

EP 2 179 270 B1

**Fig. 9**

**Fig. 10**

EP 2 179 270 B1

EP 2 179 270 B1

**Fig.11**

EP 2 179 270 B1

**Fig. 12**

## Fig. 13

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2830325

**Littérature non-brevet citée dans la description**

- **Hagen.** Chlorophyll fluorescence as a tool for non-destructive estimation of anthocyanins and total flavonoids in apples. *POSTHARVEST BIOLOGY AND TECHNOLOGY,* Août 2006, vol. 41 (2), 156-163